# EUROPÄISCHE PATENTSCHRIFT

(11) **EP 0 935 009 B1**
(45) Veröffentlichungstag und Bekanntmachung des Hinweises auf die Patenterteilung: **10.04.2002**
(21) Anmeldenummer: 98810087.1
(22) Anmeldetag: 05.02.1998
(51) Int. Cl.: C23C 4/00, C23C 4/02, B22D 25/02, F01D 11/12

(54) **Beschichteter Gusskörper**
Lined molded body
Corps moulé revêtu d'une couche

(43) Veröffentlichungstag der Anmeldung: 11.08.1999
(73) Patentinhaber: Sulzer Markets and Technology AG, 8401 Winterthur (CH)
(72) Erfinder: Staub, Fritz, 8472 Seuzach (CH)
(74) Vertreter: Sulzer Management AG

(56) Entgegenhaltungen:
- EP-A- 0 067 746
- WO-A-97/22566
- AU-B- 533 531
- DE-U- 8 411 277
- FR-A- 2 513 723
- GB-A- 1 169 347
- GB-A- 2 010 711
- GB-A- 2 062 115
- US-A- 4 867 639
- US-A- 5 064 727

## Beschreibung

Die Erfindung betrifft einen beschichteten Gusskörper gemäss Oberbegriff von Anspruch 1, Verwendungen eines solchen Gusskörpers sowie eine Turbinenschaufel, die ein Beispiel des erfindungsgemässen Gusskörpers darstellt.

Für einen guten Wirkungsgrad einer Gasturbine oder eines Flugtriebwerks ist es wesentlich, dass Dichtspalte zwischen Turbinenschaufel und Gehäuse sehr klein ausgebildet sind. Unter ungünstigen Betriebsbedingungen kann es zu einem Streifen zwischen den Schaufelspitzen und der inneren Oberfläche des Gehäuses kommen. Aus diesem Grund hat man Anstreifschichten ("Abradables") als Beschichtung der Gehäuseoberfläche entwickelt. Im Fall des Anstreifens lösen die Schaufelspitzen feine Partikel aus der Anstreifschicht, ohne dass sie dabei beschädigt werden. Die Anstreifschichten werden insbesondere durch thermisches Aufspritzen (z.B. "HVOF" oder "APS", d.h. Hochgeschwindigkeitsflammspritzen bzw. atmosphärisches Plasmaspritzen) von keramischen Pulvern hergestellt. Bekanntlich ist die Wärmeausdehnung einer keramischen Beschichtung wesentlich geringer als jene eines beschichteten metallischen Grundkörpers. Daher müssen wegen hohen Betriebstemperaturen geeignete Zwischenschichten ("Bondcoats") vorgesehen werden, die einem Abplatzen der Beschichtung entgegenwirken.

Bei Brennkammern von Gasturbinen, Einlaufsegmenten oder Leitschaufeln liegen ähnliche Probleme vor. Wärmedämmende Beschichtungen aus keramischem Material müssen geeignet auf einer abzuschirmenden Oberfläche verankert werden.

Dicke Keramikschichten haften auf einem Grundkörper in der Regel nur, wenn auf diesen zuvor eine Zwischenschicht aufgetragen worden ist. Oft enthalten solche Zwischenschichten oxidierbare Bestandteile. Eine Keramikschicht aus Zirkoniumoxid ist bei hohen Temperaturen für Sauerstoffionen durchlässig. Es kann sich daher eine Oxidation der Zwischenschicht ergeben, die - falls mit einer Volumenvergrösserung verbunden - zu einem Abplatzen der Beschichtung führen kann.

Es ist Aufgabe der Erfindung, einen beschichteten Gusskörper zu schaffen, der Mittel umfasst, mit denen eine Beschichtung trotz stark unterschiedlicher Ausdehungskoeffizienten auf einem zu beschichtenden Grundkörper gut haftet. Diese Aufgabe wird durch den in Anspruch 1 definierten Gusskörper gelöst. Der Grundkörper dieses Gusskörpers bildet dank einer besonderen Oberflächenstrukturierung ein dehnungstolerantes Substrat für eine dicke Keramikschicht und weist gleichzeitig gute Verankerungseigenschaften für diese Schicht auf.

Der Gusskörper hat einen Grundkörper aus einem ersten Material und eine Beschichtung aus mindestens einem zweiten Material. Auf einer mitgegossenen Skelettstruktur an der Oberfläche des Grundkörpers ist das zweite Material aufgebracht, wobei es eine Bedeckung oder eine Deckschicht bildet.

Die abhängigen Ansprüche 2 und 3 beziehen sich auf besondere Beschichtungen und die Ansprüche 4 bis 6 auf geometrische Eigenschaften, die besonders vorteilhaft sind hinsichtlich den in der Regel vorkommenden Fällen, dass die zu beschichtenden Oberflächen gekrümmt sind. Gegenstand von Anspruch 7 ist eine reliefartige Oberflächenstrukturierung, die sich beispielsweise für eine Wellendichtung einer Strömungsmaschine in Form einer Labyrinthdichtung eignet. Anspruch 8 betrifft die Verwendung der erfindungsgemässen Beschichtung als funktionelles Element bei verschiedenen Vorrichtungen. Eine Turbinenschaufel gemäss Anspruch 9 ist ein weiteres Beispiel für einen erfindungsgemässen Gusskörper.

Nachfolgend wird die Erfindung anhand der Zeichnungen erläutert. Es zeigen:
- Fig. 1: einen Ausschnitt aus einem erfindungsgemässen Gusskörper ohne Beschichtung, dessen Skelettstruktur als ein dreidimensionales Netzwerk ausgebildet ist,
- Fig. 2: eine weitgehend zweidimensionale Skelettstruktur,
- Fig. 3: einen Teil einer Wachsform zur Herstellung einer Skelettstruktur mittels Feingusstechnik,
- Fig. 4: ein regelmässiges hexagonales Netzwerk für eine Skelettstruktur,
- Fig. 5: einen Querschnitt durch einen erfindungsgemässen Gusskörper, bei dessen Beschichtung Hohlräume entstehen,
- Fig. 6: einen Querschnitt durch einen erfindungsgemässen Gusskörper, dessen Skelettstruktur eine Basis zu einer Oberflächenstrukturierung bildet, die reliefartig ist, und
- Fig. 7: eine Turbinenschaufel mit erfindungsgemässen Beschichtungen an der Spitze und in einem Basisbereich.

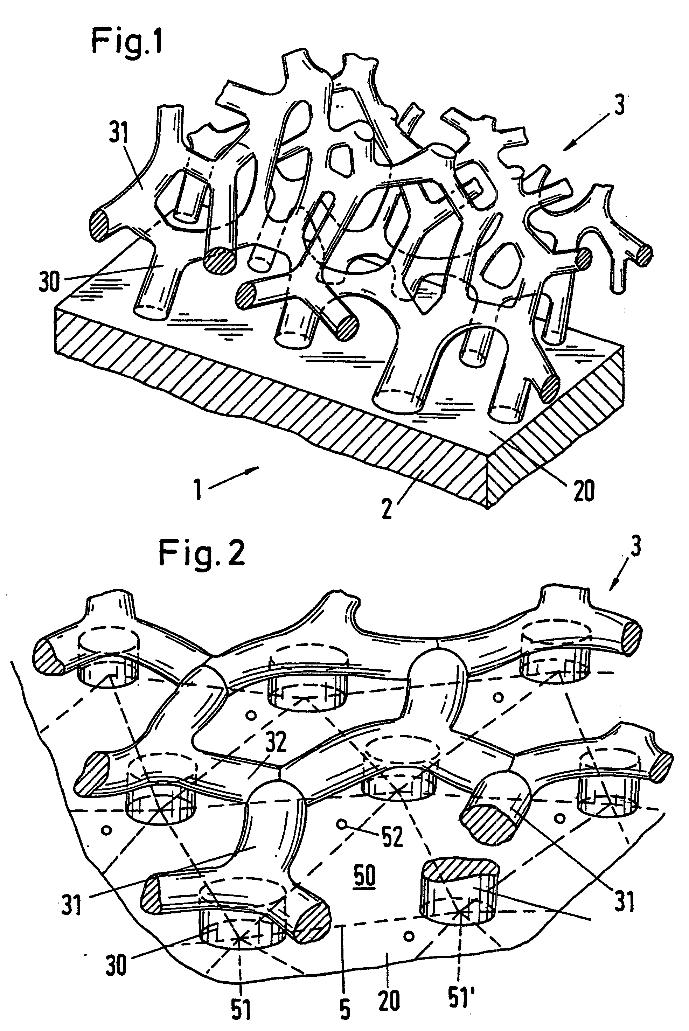

Der erfindungsgemässe Gusskörper kann mit einem Feingussverfahren hergestellt werden, wobei eine keramische Gussform durch Abformen beispielsweise eines Wachsmodells und Brennen der so gebildeten Form erzeugt wird. Dabei kann auf ein Wachsmodell eines Grundkörpers eine Skelettstruktur - ebenfalls aus Wachs - aufmontiert werden. Das Modell für die Skelettstruktur kann auch aus einem offenporigen Kunststoffschaum, dessen Wandelemente mit Wachs verdickt worden sind, hergestellt sein. Fig. 1 zeigt ein entsprechendes Beispiel: Auf einem Grundkörper 2 eines Gusskörpers 1 ist eine Skelettstruktur 3 mit der Gestalt eines dreidimensionales Netzwerks aufgebracht. Die Skelettstruktur 3 mit Stegen 31 ist über Pfeiler 30 mit der Oberfläche 20 des Grundkörpers 2 verbunden. Die Gussform wird beim Giessen so angeordnet, dass in dieser die Schmelze durch Hohlräume für die Pfeiler 30 in Hohlräume für die Stege 31 fliesst.

Fig. 2 zeigt eine Skelettstruktur 3, bei der auf Pfeilern 30 ein zweidimensionales Netzwerk oder Gitter von Stegen 31 aufgesetzt ist. Die Pfeiler 30 sind auf Eckpunkten 51 und 51' eines aus Dreiecken 50 bestehenden Netzwerks 5 angeordnet. Alle Abstände der Eckpunkte 51 zu benachbarten Eckpunkten 51' sind angenähert gleich gross. Von den Pfeilern 30 gehen jeweils drei Stege 31 aus; drei Stege 31 treffen sich jeweils in einem frei über dem Grundkörper 2 liegenden Verzweigungspunkt 32, und zwar über den mit einem kleinen Kreis 52 markierten Dreiecken 50. (Dies gilt nur für einen Innenbereich der Struktur 3; Ausnahmen in Randbereichen: zwei Stege 31 von einem Pfeiler ausgehend und keine Verzweigungspunkte 32). Wie man sieht, ist jedem Paar benachbarter Dreiecke 50 nur ein markiertes Dreieck zugehörend und somit jeweils nur ein Verzweigungspunkt 32 zuordenbar.

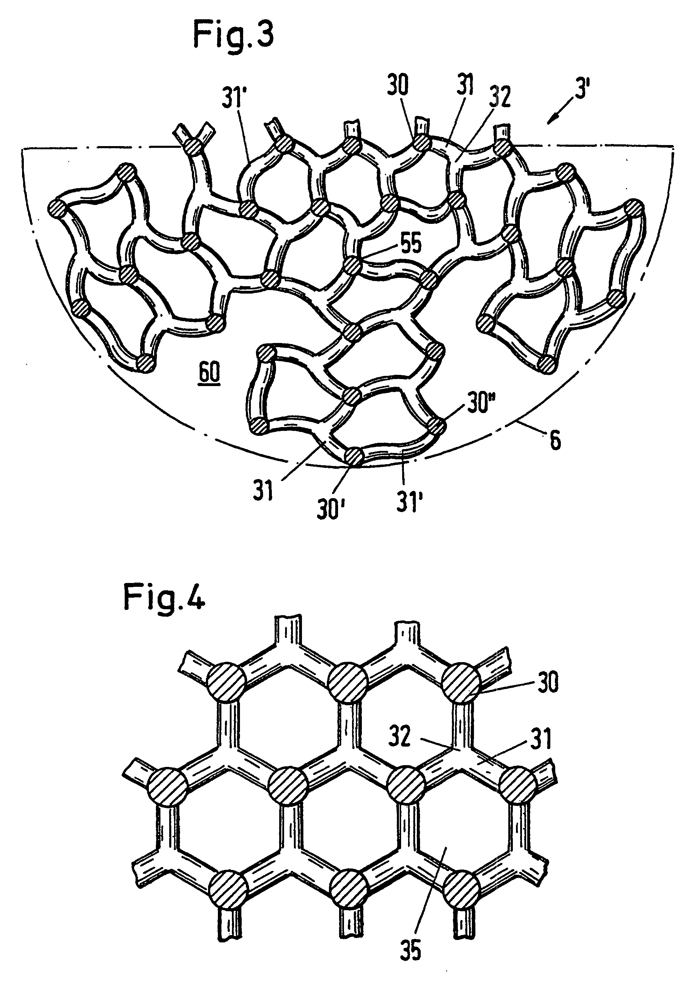

Die Stege 31 können zwischen den Pfeilern 30 und den Verzweigungspunkten 32 gerade oder gebogen sein. Die dargestellte Skelettstruktur 3 weist ein Netzwerk der Stege 31 auf, das im wesentlichen ein hexagonales Gitter ist. Ein Wachsmodell dieser Struktur 3 lässt sich besonders gut auf eine gekrümmte Oberfläche 20 aufbringen, falls diese nicht stark von einer Ebene abweicht. Falls die Krümmungen gross sind, so können auch Teilflächen des Wachsmodells herausgeschnitten und entfernt werden. Fig.3 zeigt ein ebenes Wachsmodell 3' (nur eine Hälfte 6 dargestellt, von unten gesehen), das sich für die Belegung einer Halbkugel eignet. Stegfreie Einbuchtungen 60 ermöglichen eine Anpassung, die eine weitgehend gleichmässige Belegung der Kugelform ergibt. Aus Fig.3 ist ersichtlich, dass im Randbereich den Pfeilern 30' in der Regel nur jeweils zwei Stege 31, 31' zugeordnet sind, wobei der Steg 31' eine direkte Verbindung zum benachbarten Pfeiler 30" ohne einen Verzweigungspunkt 32 herstellt.

Typischerweise haben die Abstände zwischen benachbarten Eckpunkten 51 und 51' (siehe Fig.2) Werte im Bereich von rund 2 bis 5 mm. Der Abstand der Stege 31 von dem Grundkörper 2 ist in der Grössenordnung von 1 mm.

Bei einem hexagonalen Gitter treffen sich im Netzwerk 5 jeweils sechs Dreiecke in den Knotenpunkten 51. Es sind aber auch Abweichungen möglich, beispielsweise Knotenpunkte 55 (siehe Fig 3), denen nur fünf Dreiecke zuordenbar sind.

Statt eines hexagonalen Gitters können auch Gitter mit vier- oder dreieckigen Strukturelementen vorgesehen sein. Solche Gittervarianten sind aber weniger geeignet für Strukturierungen von gekrümmten Oberflächen. Dies ist besonders deutlich bei Gittern mit dreieckigen Strukturelementen der Fall.

Während die Fig.2 ausschnittsweise eine Skelettstruktur 3 mit einem verallgemeinerten hexagonalen Gitter als Schrägbild darstellt, zeigt Fig.4 eine regelmässige Ausführungsform dieses Gitters. Wie schon in Fig.3 handelt es sich um eine Ansicht von dem Grundkörper 2 (siehe Fig.1) aus, wobei die Pfeiler 30 als Schnittflächen erscheinen. Die Stege weisen Breiten von rund 15-30 % des mittleren Durchmessers einer hexagonalen Einheitszelle 35 des Gitters auf.

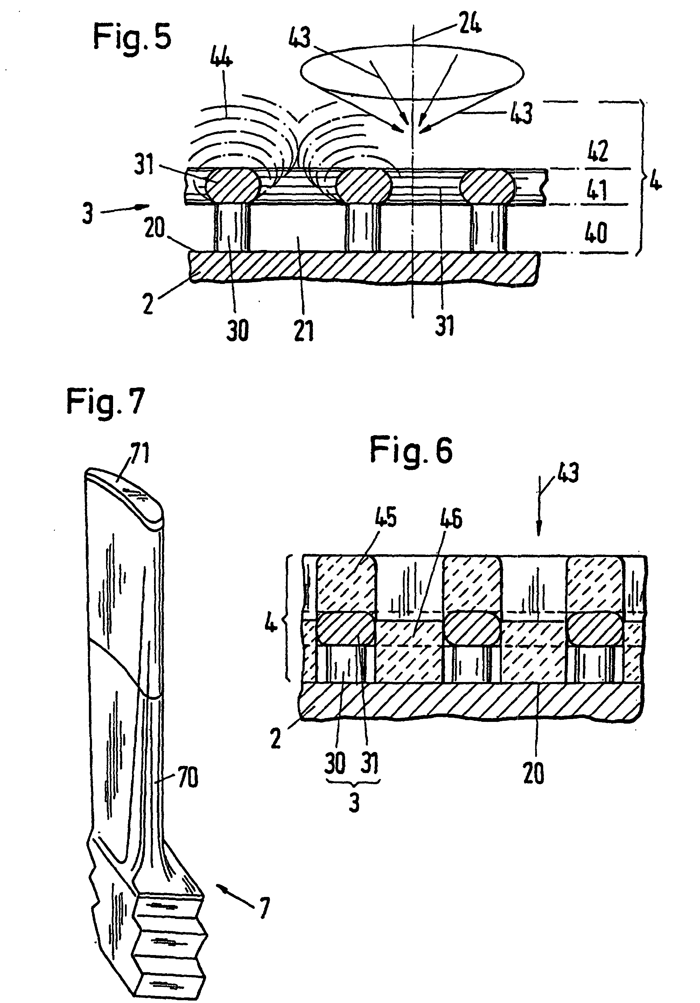

Erfindungsgemäss weist der Gusskörper 1 - siehe Fig.5 - eine Bedeckung 4 auf, die durch ein thermisches Spritzverfahren herstellbar ist. Der Aufbau der Bedeckung hängt vom Winkel der Richtung 43 ab, unter welchem der Spritzstrahl beim Aufspritzen auf den Gusskörper 1 auftrifft. Ist dieser Winkel flach, so ergeben sich je nach Skelettstruktur grosse Hohlräume 21 zwischen den Pfeilern 30. Erfolgt die Beschichtung bei gleichmässiger Rotation des Gusskörpers 1 um eine zur Oberfläche 20 senkrechte Achse 24, so ergibt sich eine Beschichtung 42 mit gleichmässigem Aufbau, was durch die strichpunktiert gezeichneten Linien 44 angedeutet ist. Eine Bedeckung 4 des Grundkörpers 2 umfasst schliesslich drei Zonen: eine Zone 40 mit Pfeilern 30 der Skelettstruktur 3 und Hohlräumen 21; eine Zone 41, die das Gitter der Stege 31, Beschichtungsmaterial und Hohlräume umfasst; sowie eine Zone 42, die die eigentliche Beschichtung darstellt und die in der mittleren Zone 41 verankert ist. Die Zone 40 ist der Basisbereich der Bedeckung 4, die Zone 41 der Verankerungsbereich und die Zone 42 die Deckschicht oder Beschichtung.

Fig.6 zeigt eine Bedeckung 4, bei deren Herstellung die Richtung 43 des Spritzstrahls senkrecht zur Oberfläche 20 gewählt worden ist. Die Skelettstruktur 3 bildet in diesem Fall eine Basis zu der Deckschicht 4, durch die sich eine reliefartige Oberflächenstrukturierung mit Erhebungen 45 und Vertiefungen 46 ergibt. Eine solche Oberflächenstrukturierung lässt sich bei geeigneter Ausgestaltung z.B. als Labyrinthdichtung für die Wellendichtung einer Strömungsmaschine verwenden.

Die zwei in den Figuren 5 und 6 dargestellten Bedeckungen 4 stellen zwei Extremfälle dar. Durch geeignete Ausbildung der Skelettstruktur 3 und geeignete Führung des Spritzstrahls lassen sich auch Beschichtungen herstellen, die eine weitgehend ebene Oberfläche haben und die keine grösseren Hohlräume enthalten.

Für die Beschichtung können auch verschiedene Materialien verwendet werden. So kann es vorteilhaft sein, wenn dem Pulver, das zuerst auf die Skelettstruktur aufgebracht wird, zusätzlich zum keramischem Pulver metallische Pulverteilchen zugemischt sind, so dass sich ein "Cermet" ausbildet. Dadurch ergibt sich ein ausgleichender Übergang zwischen dem metallischen Grundkörper und der keramischen Beschichtung.

Fig.7 zeigt eine Turbinenschaufel 7, die in Form eines erfindungsgemässen Gusskörpers ausgebildet ist. An der Schaufelspitze und in einem Bereich der Basis der Schaufel sind auf Skelettstrukturen verankerte Beschichtungen 71 bzw. 70 aufgebracht. Die Beschichtung 71 der Schaufelspitze dient als Panzerung, so dass sie beim Berühren einer Anstreifschicht nicht beschädigt wird. Die Beschichtung 70 des Basisbreichs ist als Wärmedämmung vorgesehen; sie soll ein Abfliessen von Wärme in ein die Schaufel tragendes Rad reduzieren. Bei der Beschichtung 70 ist die Beschichtung mit Hohlräumen gemäss Fig.5 besonders vorteilhaft.

Als Material für den Grundkörper verwendet man mit Vorteil Legierungen, die bei den vorgesehenen hohen Betriebstemperaturen nicht oxidieren. So entstehen die erwähnten, bei oxidierbaren Zwischenschichten beobachteten Probleme nicht mehr.

## Patentansprüche

1. Gusskörper (1) mit einem Grundkörper (2) aus einem ersten Material und einer Beschichtung aus mindestens einem zweiten Material, wobei das zweite Material - eine Bedeckung (4) oder eine Deckschicht (42) bildend - auf eine Skelettstruktur (3) aufgebracht ist, die an der Oberfläche (20) des Grundkörpers mitgegossenen ist,
**dadurch gekennzeichnet, dass** die Skelettstruktur (3) als ein weitgehend zweidimensionales Gitter oder ein dreidimensionales Netzwerk ausgebildet ist, das über eine Vielzahl von Pfeilern (30) mit dem Grundkörper (2) verbunden ist.

2. Gusskörper nach Anspruch 1, **dadurch gekennzeichnet, dass** das erste Material eine metallische, mittels einer Feingusstechnik geformte Legierung ist und das zweite Material, das insbesondere keramisch ist, durch ein thermisches Spritzverfahren aufgebracht ist.

3. Gusskörper nach Anspruch 1 oder 2, **dadurch gekennzeichnet, dass** in einem Basisbereich (40) der Skelettstruktur (3) unmittelbar über dem Grundkörper (2) Hohlräume (21) bestehen, die durch das Beschichtungsmaterial nicht gefüllt sind.

4. Gusskörper nach Anspruch 1, **dadurch gekennzeichnet, dass** die Pfeiler (30) auf Eckpunkten (51, 51') eines aus Dreiecken (50) bestehenden Netzwerks (5) angeordnet sind, dass für eine Mehrzahl der Eckpunkte (51) die Abstände zu benachbarten Eckpunkten (51') jeweils zumindest angenährt gleich gross sind, dass an den Pfeilern in einem Abstand zur Oberfläche (20) des Grundkörpers (2) ein zweidimensionales Gitter von Stegen (31) angeordnet ist, wobei insbesondere benachbarte Eckpunkte Abstände zwischen rund 2 und 5 mm aufweisen und der Abstand der Stege von dem Grundkörper in der Grössenordnung von 1 mm ist.

5. Gusskörper nach Anspruch 4, **dadurch gekennzeichnet, dass** - bis auf Ausnahmen - jeweils von einem Pfeiler (30) drei Stege (31) ausgehen und drei Stege sich jeweils in einem frei über dem Grundkörper (2) liegenden Punkt (32) treffen, wobei in der Regel jedem Paar benachbarter Dreiecke (50) jeweils nur ein solcher Punkt (32) zuordenbar ist.

6. Gusskörper nach Anspruch 5, **dadurch gekennzeichnet, dass** die Stege (31) ein Gitter mit einem regelmässigen hexagonalen Muster bilden, wobei insbesondere die Stege Breiten von rund 15-30 % des mitteleren Durchmessers einer hexagonalen Einheitszelle (35) des Gitters aufweisen.

7. Gusskörper nach einem der Ansprüche 1 bis 3, **dadurch gekennzeichnet, dass** die Skelettstruktur (3) eine Basis zu einer reliefartigen Oberflächenstrukturierung (45, 46) der Bedeckung (4) bildet.

8. Verwendung eines Gusskörpers gemäss einem der Ansprüche 1 bis 7 als ein Wandelement in einer Vorrichtung, in der die Deckschicht eine Funktion aufweist, nämlich als Wärmedämmung, beispielsweise im Fall einer Brennkammer, oder als Anstreifschicht, beispielsweise im Fall einer Gasturbine, oder als Labyrinthdichtung, beispielsweise im Fall einer Wellendichtung einer Strömungsmaschine.

9. Turbinenschaufel (7), hergestellt als Gusskörper (1) gemäss einem der Ansprüche 1 bis 7, **gekennzeichnet durch** auf Skelettstrukturen (3) verankerte Beschichtungen (70, 71), die an der Schaufelspitze und/oder in einem Bereich der Basis der Schaufel aufgebracht sind.

## Claims

1. Cast part (1) comprising a basic body (2) of a first material and a coating of at least one second material, with the second material - forming a covering (4) or a cover layer (42) - being applied to a skeleton structure, which is co-cast on the surface (20) of the basic body, **characterised in that** the skeleton structure (3) is formed as a largely two dimensional grid or as a three dimensional network which is connected via a large number of pillars (30) to the basic body (2).

2. Cast part in accordance with claim 1 **characterised in that** the first material is a metallic alloy which is formed by means of a precision casting technique; and **in that** the second material, which is in particular ceramic, is applied by a thermal spraying method.

3. Cast part in accordance with claim 1 or claim 2 **characterised in that** cavities (21) which are not filled by the coating material are present in a base region (40) of the skeleton structure (3) immediately above the basic body (2).

4. Cast part in accordance with claim 1 **characterised in that** the pillars (30) are arranged at the corner points (51, 51') of a network (5) consisting of triangles (50); **in that**, for a majority of the corner points (51), the distances to adjacent corner points (51') are in each case at least approximately equally large; and **in that** a two dimensional grid of webs (31) is arranged at the pillars at a distance from the surface (20) of the basic body (2), with in particular adjacent corner points having distances between about 2 and 5 mm and with the distance of the webs from the basic body being of the order of magnitude of 1 mm.

5. Cast part in accordance with claim 4 **characterised in that** ― apart from exceptions ― three webs (31) go out in each case from a pillar (30) and three webs meet in each case at a point (32) which is freely disposed above the basic body (2), with it being possible as a rule to associate only one point (32) of this kind with each pair of adjacent triangles (50).

6. Cast part in accordance with claim 5 **characterised in that** the webs (31) form a grid with a regular hexagonal pattern, with in particular the webs having widths of about 15-30 % of the average diameter of a hexagonal unit cell (35) of the grid.

7. Cast part in accordance with one of the claims 1 to 3 **characterised in that** the skeleton structure (3) forms a basis for a relief-like surface structuring (45, 46) of the covering (4).

8. Use of a cast part in accordance with one of the claims 1 to 7 as a wall element in an apparatus in which the covering layer has a function, namely as a heat insulation, for example in the case of a combustion chamber, or as an abradable layer, for example in the case of a gas turbine, or as a labyrinth seal, for example in the case of a shaft seal of a flow machine.

9. Turbine blade (7), manufactured as a cast part (1) in accordance with one of the claims 1 to 7 **characterised by** coatings (70, 71) which are anchored on skeleton structures (3) and are applied to the blade tip and/or in a region of the base of the blade.

## Revendications

1. Corps moulé (1) avec un corps de base (2) en un premier matériau et un revêtement en au moins un deuxième matériau, où le deuxième matériau - en formant un recouvrement (4) ou une couche de revêtement (42) - est appliqué sur une ossature (3) coulée unitairement à la surface (20) du corps de base, **caractérisé en ce que** l'ossature (3) est réalisée comme une grille sensiblement bidimensionnelle ou un treillis tridimensionnel qui est relié par une pluralité de poteaux (30) au corps de base (2).

2. Corps moulé selon la revendication 1, **caractérisé en ce que** le premier matériau est un alliage métallique formé au moyen d'une technique de coulée de précision, et **en ce que** le deuxième matériau, qui est notamment céramique, est appliqué par un procédé de pulvérisation thermique.

3. Corps moulé selon la revendication 1 ou 2, **caractérisé en ce que** dans une zone de base (40) de l'ossature (3), des espaces creux (21) existent directement au-dessus du corps de base (2) qui ne sont pas remplis par le matériau de revêtement.

4. Corps moulé selon la revendication 1, **caractérisé en ce que** les poteaux (30) sont disposés sur des points d'angle (51, 51') d'un treillis (5) constitué de triangles (50), **en ce que** pour une multitude des points d'angle (51), les écarts aux points d'angle avoisinants (51') sont respectivement au moins approximativement de la même grandeur, qu'il est disposé aux poteaux à un écart de la surface (20) du corps de base (2) une grille bidimensionnelle de nervures (31), où notamment des points d'angle avoisinants présentent des écarts entre environ 2 et 5 mm, et l'écart des nervures du corps de base se situe dans l'ordre de grandeur de 1 mm.

5. Corps moulé selon la revendication 4, **caractérisé en ce que** - à part des exceptions - trois nervures (31) partent respectivement d'un poteau (30) et trois nervures se rencontrent respectivement à un point (32) situé librement sur le corps de base (2), où en règle générale, respectivement seulement un tel point (32) peut être associé à chaque paire de triangles avoisinants (50).

6. Corps moulé selon la revendication 5, **caractérisé en ce que** les nervures (31) forment une grille avec un motif hexagonal régulier, où notamment les nervures ont des largeurs d'environ 15-30 % du diamètre moyen d'une cellule unitaire hexagonale (35) de la grille.

7. Corps moulé selon l'une des revendications 1 à 3, **caractérisé en ce que** l'ossature (3) constitue une base pour une structuration de surface en forme de relief (45, 46) du recouvrement (4).

8. Utilisation d'un corps de base selon l'une des revendications 1 à 7 comme élément de paroi dans un dispositif, dans lequel la couche de revêtement a une fonction, à savoir comme isolant thermique, par exemple dans le cas d'une chambre de combustion, ou comme couche d'abrasion, par exemple dans le cas d'une turbine à gaz, ou comme garniture à labyrinthe, par exemple dans le cas d'une étanchéité d'arbre d'une turbomachine.

9. Aube de turbine (7), réalisée comme corps moulé (1) selon l'une des revendications 1 à 7, **caractérisé par** des revêtements (70, 71) ancrés sur des ossatures (3) qui sont appliqués à la pointe de l'aube et/ou dans une zone de base de l'aube.
